# EUROPEAN PATENT SPECIFICATION

(11) **EP 2 291 870 B1**
(45) Date of publication and mention of the grant of the patent: **15.08.2018**
(21) Application number: 09759629.0
(22) Date of filing: 08.06.2009
(51) Int. Cl.: H01Q 9/04, H01Q 5/307, H01Q 9/40, G06K 19/077, H01Q 1/22

(54) **BROADBAND ANTENNA WITH MULTIPLE ASSOCIATED PATCHES AND COPLANAR GROUNDING FOR RFID APPLICATIONS**
BREITBANDANTENNE MIT MEHREREN ASSOZIIERTEN PATCHES UND COPLANARER MASSEVERBINDUNG FÜR RFID-ANWENDUNGEN
ANTENNE À LARGE BANDE AVEC MULTIPLES PLAQUES ASSOCIÉES ET MISE À LA TERRE COPLANAIRE POUR APPLICATIONS RFID

(30) Priority: 06.06.2008 US 59665 P
(43) Date of publication of application: 09.03.2011
(73) Proprietor: Tyco Fire & Security GmbH, 8212 Neuhausen am Rheinfall (CH)
(72) Inventor: CAMPERO, Richard, John, San Clemente CA 92673 (US); JIANG, Bing, San Diego, CA (US); TRIVELPIECE, Steve, Edward, Irvine CA 92620 (US)
(74) Representative: Hedges, Martin Nicholas
(86) International application number: PCT/US2009/046657
(87) International publication number: WO 2009/149471

(56) References cited:
- WO-A1-03/023900
- US-A- 5 187 490
- US-A- 5 926 136
- US-A- 6 005 519
- US-A- 6 061 025
- US-A1- 2002 175 865
- US-A1- 2006 033 666
- US-A1- 2006 152 364
- US-A1- 2008 030 422
- US-A1- 2008 122 712
- US-B1- 6 259 408
- US-B1- 6 545 640
- MAHE Y ET AL: "MINIATURIZED PATCH ANTENNA FOR DUAL-FREQUENCY OPERATION", 31ST EUROPEAN MICROWAVE CONFERENCE PROCEEDINGS. LONDON, SEPT. 25 - 27, 2001; [PROCEEDINGS OF THE EUROPEAN MICROWAVE CONFERENCE], LONDON : CMP, GB, vol. CONF. 31, 25 September 2001 (2001-09-25), pages 141-144, XP001044863, ISBN: 978-0-86213-148-7
- SHENG-MING DENG: "A T-strip loaded rectangular microstrip patch antenna for dual-frequency operation", ANTENNAS AND PROPAGATION SOCIETY, 1999. IEEE INTERNATIONAL SYMPOSIUM 1999, IEEE INTERNATIONAL SYMPOSIUM 1999, ORLANDO, FL, USA, vol. 2, 11 July 1999 (1999-07-11), pages 940-943, XP010348323, DOI: 10.1109/APS.1999.789467 ISBN: 978-0-7803-5639-9

## Description

### FIELD OF THE INVENTION

The present invention relates generally to a low-cost, low thickness, compact, wideband patch antenna with two or more connected radiating elements and reference ground conductor, all in the same geometric plane or closely spaced parallel planes, and optionally including a direct electrical short connection (DC closed short circuit) between the patch system and the ground conductor for the dissipation of electrostatic charge. Such a patch antenna or an array of such patch antennas has utility in radio frequency identification (RFID) applications in which UHF-band signals are passed between a reader (transceiver) and a tag (transponder) *via* the patch antenna. The invention is of particular use in RFID applications in which it is desirable to create a space with well-controlled directional UHF signal emission above a surface such as an RFID smart shelf, smart counter-top or other RFID-enabled surface, which space contains a collection of RFID tagged items, and such that the items in the space can be dependably read using UHF signals from the RFID reader attached to the antenna, while reducing the incidence and severity of null zones or locations in the space at which the UHF signals are too weak to communicate with RFID tags. The current invention with its improved bandwidth is of particular utility in situations in which items and material in the environment around the antenna greatly influence (*i.e.,* de-tune, or cause a fatal shift of) the resonance frequency of conventional narrow-band prior art antennas away from the operating frequency of the tags and readers (transceivers).

### BACKGROUND ART

Radio frequency identification (RFID) systems and other forms of electronic article surveillance are increasingly used to track items whose locations or dispositions are of some economic, safety, or other interest. In these applications, typically, transponders or tags are attached to or placed inside the items to be tracked, and these transponders or tags are in at least intermittent communication with transceivers or readers which report the tag (and, by inference, item) location to people or software applications *via* a network to which the readers are directly or indirectly attached. Examples of RFID applications include tracking of retail items being offered for public sale within a store, inventory management of those items within the store backroom, on store shelving fixtures, displays, counters, cases, cabinets, closets, or other fixtures, and tracking of items to and through the point of sale and store exits. Item tracking applications also exist which involve warehouses, distribution centers, trucks, vans, shipping containers, and other points of storage or conveyance of items as they move through the retail supply chain. Another area of application of RFID technology involves asset tracking in which valuable items (not necessarily for sale to the public) are tracked in an environment to prevent theft, loss, or misplacement, or to maintain the integrity of the chain of custody of the asset. These applications of RFID technology are given by way of example only, and it should be understood that many other applications of the technology exist.

RFID systems typically use reader antennas to emit electromagnetic carrier waves encoded with digital signals to RFID tags. As such, the reader antenna is a critical component facilitating the communication between tag and reader, and influencing the quality of that communication. A reader antenna can be thought of as a transducer which converts signal-laden alternating electrical current from the reader into signal-laden oscillating electromagnetic fields or waves appropriate for an adjacent second antenna located in the tag, or alternatively, and which also facilitates the reverse process of converting signal-laden oscillating electromagnetic fields or waves (sent from or modified by the tag) into signal-laden alternating electric current for demodulation by and communication with the reader. Generally speaking, the resonance characteristics and tuning (and tunability) of the reader antenna is determined not only by the antenna geometric shape and dimensions, stack-up (material layering) and construction, and fabrication materials, but also by the characteristics of the environment surrounding the antenna. Ideally, an RFID antenna will have large bandwidth - that is, will effectively emit and receive signals in a relatively wide frequency range centered on or near the frequency at which the RFID tags and reader are designed to operate. For antennas of sufficient bandwidth, small changes in system resonance characteristics caused by occasional and largely uncontrollable changes in the antenna surroundings will not cause a fatal detuning of the antenna away from the design frequency. Types of antennas used in RFID systems include patch antennas, slot antennas, dipole antennas, loop antennas, and many other types and variations of these types.

In the case of passive RFID systems, the RFID tag is powered by the electromagnetic carrier wave. Once powered, the passive tag interprets the radio frequency (RF) signals and provides an appropriate response, usually by creating a timed, intermittent disturbance in the electromagnetic carrier wave. These disturbances, which encode the tag response, are sensed by the reader through the reader's antenna. In the case of active RFID systems the tag contains its own power source, such as a battery, which it can use to either initiate RF communications with the reader by creating its own carrier wave and encoded RF signals, or to enhance the tag performance by increasing the tag's data processing rate or by increasing the power in the tag's response, and hence the maximum distance of communication between the tag and reader.

Especially for passive RFID systems, it is often convenient to distinguish the behavior of RFID systems and their antennas in terms of near-field versus far-field behavior. "Near-field" and "far-field" are relative terms, and it is with respect to the wavelength of the carrier wave that the terms "near" and "far" have meaning. When the distances involved in an application are much greater than the length of the carrier wave and the antenna dimensions, the application is a far-field application, and often (at great distances from the antenna) the antenna can be viewed as a point-source (as in most telecommunications applications). On the other hand, when the distances involved in an application are much shorter than the wavelength and antenna dimensions, the relevant electromagnetic interactions between antennas (*e.g.,* reader antenna and tag antenna) are near-field interactions. In such a situation the reactive electric or magnetic component dominates the EM field, and the interaction between the two coupled antennas occurs via disturbances in the field. When the application of interest involves distances on the order of the wavelength of the carrier wave, the situation is more complex and cannot be thought of as simply near-field or simply far-field. In the current patent application this situation will be termed "mid-field".

Two common frequency bands used by commercial RFID systems are HF (13.56MHz) and UHF (approximately 850 to 950MHz, with the specific band depending on the country in question). Since a tag on an RFID-tagged consumer item is generally used for many applications throughout the supply chain, from manufacturing and distribution to the final retail store location, the functional requirements of retail shelves are only one of the sets of factors influencing the choice of tag frequency. There are many factors and requirements of interest to various trading partners in the supply chain, and in this complex situation both HF and UHF are used extensively for tracking tagged items on and in smart shelving, racks, cabinets, and other retail, warehouse, and other business fixtures. U.S. Patents 7,268,742, 6,989,796, 6,943,688, 6,861,993, 6,696,954, 6,600,420, and 6,335,686 all deal with RFID antenna applications to smart shelves, cabinets, and related fixtures. 13.56MHz waves have a wavelength of just over 22 meters (72 feet), while the wavelength of UHF radiation used in RFID applications is approximately a third of a meter, or about 12 inches. Since the distances characteristic of item-level RFID applications involving the tracking and surveillance of tagged items on or in shelves, cabinets, racks, counters, and other such fixtures are on the order of feet (*e.g.,* 0.5 ft to several feet), it is clear that, when UHF technology is used, the antenna interactions are near-field, far-field, and mid-field. In this case, a poor choice of reader antenna type, or the poor design of a proper type, can result in poor performance of the overall RFID system and application failure. One of the reasons for this is that in a mid-field situation the electric and magnetic fields emitting from the reader antenna vary significantly over the relevant surface (*e.g.,* the surface of a retail shelf holding tagged items). The field may be strong in one place and much weaker in another place a few inches away (because the wavelength of UHF radiation is only a few inches), and the general behavior of the UHF system is much more complex than is observed in 13.56MHz applications. Thus, in situations where UHF tags are used in RFID item tracking on shelves and other storage fixtures, the design of the reader antenna becomes critical.

The detection range of passive RFID systems is typically limited by signal strength over short ranges, for example, frequently less than a few feet for passive UHF RFID systems. Due to this read range limitation in passive UHF RFID systems, many applications make use of portable reader units which may be manually moved around a group of tagged items in order to detect all the tags, particularly where the tagged items are stored in a space significantly larger than the detection range of a stationary or fixed reader equipped with one fixed antenna. However, portable UHF reader units suffer from several disadvantages. The first involves the cost of human labor associated with the scanning activity. Fixed infrastructure, once paid for, is much cheaper to operate than are manual systems which have ongoing labor costs associated with them. In addition, portable units often lead to ambiguity regarding the precise location of the tags read. For instance, the reader location may be noted by the user, but the location of the tag during a read event may not be known sufficiently well for a given application. That is, the use of portable RFID readers often leads to a spatial resolution certainty of only a few feet, and many applications require knowledge of the location of the tagged items within a spatial resolution of a few inches. Portable RFID readers can also be more easily lost or stolen than is the case for fixed reader and antenna systems.

As an alternative to portable UHF RFID readers, a large fixed reader antenna driven with sufficient power to detect a larger number of tagged items may be used. However, such an antenna may be unwieldy, aesthetically displeasing, and the radiated power may surpass allowable legal or regulatory limits. Furthermore, these reader antennas are often located in stores or other locations were space is at a premium and it is expensive and inconvenient to use such large reader antennas. In addition, it should be noted that when a single large antenna is used to survey a large area (*e.g.,* a set of retail shelves, or an entire cabinet, or entire counter, or the like), it is not possible to resolve the location of a tagged item to a particular spot on or small sub-section of the shelf fixture. In some applications it may be desirable to know the location of the tagged item with a spatial resolution of a few inches (*e.g.,* if there are many small items on the shelf and it is desired to minimize manual searching and sorting time). In this situation the use of a single large reader antenna is not desirable because it is not generally possible to locate the item with the desired spatial resolution.

Alternatively, a fully automated mobile antenna system can be used. U.S. Patent 7,132,945 describes a shelf system which employs a mobile or scanning antenna. This approach makes it possible to survey a relatively large area and also eliminates the need for human labor. However, the introduction of moving parts into a commercial shelf system may prove impractical because of higher system cost, greater installation complexity, and higher maintenance costs, and inconvenience of system downtime, as is often observed with machines which incorporate moving parts. Beam-forming smart antennas can scan the space with a narrow beam and without moving parts. However, as active devices they are usually big and expensive if compared with passive antennas.

To overcome the disadvantages of the approaches described above, fixed arrays of small antennas are utilized in some UHF RFID applications. In this approach numerous reader antennas spanning over a large area are connected to a single reader or group of readers *via* some sort of switching network, as described for example in U.S. Patent 7,084,769. Smart shelving and other similar applications involving the tracking or inventory auditing of small tagged items in or on RFID-enabled shelves, cabinets, cases, racks, or other fixtures can make use of fixed arrays of small antennas. In tracking tagged stationary items in smart shelving and similar applications, fixed arrays of small antennas offer several advantages over portable readers, systems with a single large fixed antenna, and moving-antenna systems. First, the antennas themselves are small, and thus require relatively little power to survey the space surrounding each antenna. Thus, in systems which query these antennas one at a time, the system itself requires relatively little power (usually much less than 1 watt). Furthermore, by querying each of the small antennas in a large array, the system can thus survey a large area with relatively little power. Also, because the UHF antennas used in the antenna array are generally small and (due to their limited power and range of less than 1-3 feet) survey a small space with a specific known spatial location, it must also be true that the tagged items read by a specified antenna in the array are also located to the same spatial resolution of 1-12 inches. Thus systems using fixed arrays of small antennas can determine the location of tagged items with more precision than portable RFID readers and systems using a small number of relatively large antennas. Also, because each antenna in the array is relatively small, it is much easier to hide the antennas inside of the shelving or other storage fixture, thus improving aesthetics and minimizing damage from external disruptive events (*e.g.,* children's curiosity-driven handling, or malicious activity by people in general). Also, an array of fixed antennas involves no moving parts and thus suffers from none of the disadvantages associated with moving parts, as described above. Also, small antennas like those used in such antenna arrays may be cheaper to replace when a single antenna element fails (relative to the cost of replacing a single large antenna). Also, fixed arrays of antennas do not require special manual labor to execute the scanning of tagged items and, therefore, do not have associated with them the high cost of manual labor associated with portable reader and antenna systems, or with mobile cart approaches.

In smart shelving and similar applications it is often important for economic and aesthetic reasons that the antennas used in the antenna array be simple, low cost, easy to retrofit into existing infrastructure, easy to hide from the view of people in the vicinity of the antennas, and that the antennas can be installed and connected quickly. These application requirements are more easily met with an antenna configuration which minimizes the overall antenna thickness. That is, thin or low profile antennas are easier to hide, and easier to fit into existing infrastructure without requiring special modification to that existing infrastructure. Also, reducing the antenna thickness tends to reduce antenna cost, since less material is used in a thinner antenna. For reasons of cost and installation convenience it is also desirable to have the simplest possible approach to the attachment of the RF feed cables or wires to the antennas. Preferably, the attachment should be made in one location, on one surface, without requiring a hole or special channel, wire, or conductive via through the antenna substrate. It is also important that the design of the UHF antennas allows for reading of RFID tags in the space near the antennas without "dead zones" or small areas between and around antennas in which the emitted fields are too weak to facilitate communication between the tag and reader. Another requirement for the antennas used in smart shelf and similar applications is that they have the ability to read items with a diversity of tag antenna orientations *(i.e.,* tag orientation independence, or behavior at least approaching that ideal).

Traditional patch antennas, slot antennas, dipole antennas, and other common UHF antenna types which might be used in antenna systems such as those described above generally involve multiple layers. U.S. Patent 6,639,556 shows a patch antenna design with this layered structure and a central hole for the RF feed. U.S. Patent 6,480,170 also shows a patch antenna with reference ground and radiating element on opposing sides of an intervening dielectric. U. S. Patent 6,005,519 relates to microstrip antenna having a substrate layer with a high dielectric constant placed between a radiating element and a ground plane layer. The electrically conductive radiating element is fabricated on the substrate layer such that a main patch surrounded by a number of individual tuning patches connected to the main patch and to each other are provided. A multi-layer antenna design can lead to excessive fabrication cost and excessive antenna thickness (complicating the retrofitting of existing infrastructure during antenna installation, and making it more difficult to hide the antennas from view). Multi-layer antenna designs also tend to complicate the form of the attachment of the connecting wires (for example, co-axial cable between the antenna and reader) since the connections of the signal carrier and reference ground occur on different layers.

US2006/033666 A1 relates to an antenna assembly that includes a substrate having a first surface and a second surface opposite to the first surface, a dual-band dipole antenna having a symmetrical structure and arranged on the first surface, a feed cable arranged on the first surface for feeding the dipole antenna, and a parasitic element arranged on the second surface. The parasitic element has a pair of symmetrical first and second parasitic sections. The first parasitic section includes a first, a second and a third patches, and the second parasitic section includes a first, a second and a third pieces. The first, the second and the third patches are separated from each other. The first, the second and the third pieces are separated from each other. The parasitic element can increase the gain of the dipole antenna through coupling with the dipole antenna.

US 5926136 relates to an antenna apparatus in which dielectric layers are stacked between a ground plate and a major radiating conductor.

US 5187490 relates to a strip line patch antenna having a slot plate. The antenna includes at least one radiating element for transmitting and receiving radio waves; a feed line for transmitting signals to and from the radiating element; a dielectric substrate for supporting the radiating element means and the feed line means; a grounding conductor located below the dielectric substrate; and a slot plate located above the dielectric substrate, having a plurality of slots more numerous than the radiating element. A plurality of antenna units so constructed can be arranged in array such that at least one of the slots of each antenna unit is shared with a neighboring antenna unit.

For UHF smart shelving applications the patch antenna is a good choice of antenna type because the fields emitted from the patch antenna are predominantly in the direction orthogonal to the plane of the antenna, so the antenna can be placed on or inside the shelf surface and create an RFID-active space in the region immediately above the shelf, and read the tagged items sitting on the surface of the shelf with relative ease. Of course, this presupposes that the particular patch antenna design yields sufficient bandwidth and radiation efficiency to create, for a given convenient and practical power input, a sufficiently large space around the antenna wherein tagged items can be dependably and consistently read. The traditional patch antenna described in the prior art has a main radiative element of conductive material fabricated on top of a dielectric material. Beneath *(i.e.,* on the reverse side of) the dielectric material is typically located a reference ground element, which is a planar layer of conductive material electrically grounded with respect to the signals being transmitted or received by the antenna. In the typical patch antenna design well known in the prior art, the antenna main radiative element and the reference ground element are in parallel planes separated by the dielectric material (which, in some cases, is simply an air spacer). Also, in the usual case, the main radiative element and the reference ground element are fabricated with one directly above the other, or with one substantially overlapping with the other in their respective parallel planes. A disadvantage of this traditional multi-layer patch antenna design is that the connection of the shielded cable or twisted pair wire carrying signals between the antenna and the RFID reader must be attached to the antenna on two separate levels separated by the dielectric material, thus requiring a connecting hole or via in the dielectric layer.

The size of the gap between the radiating element and the reference ground conductor (*i.e.,* the dielectric layer thickness) is a critical design parameter in the traditional patch antenna since, for a given dielectric material, the thickness of this gap largely determines the bandwidth of the antenna. As the gap is reduced, the bandwidth is narrowed. If the bandwidth of the antenna is too narrow, the tuning of the antenna in a given application becomes very difficult, and uncontrollable changes in the environment during normal operation (such as the unanticipated and random introduction of metal objects, human hands, or other items or materials into the area being monitored by the antenna) can cause a shift in resonance frequency which, combined with the overly narrow bandwidth, causes a significant detuning of the antenna and failure in RFID tag detection and reading. Thus, for a given application there is for practical reasons a lower limit on the distance between the ground plane and the radiating element in a traditional patch antenna design, and this constrains the overall thickness of the antenna.

Another constraint on the thickness of a traditional patch antenna stems from radiation efficiency (fraction of total electrical energy put into the antenna which is emitted as electromagnetic radiation). If the dielectric thickness or gap between the reference ground and radiating element is too small, the radiating efficiency will be too low because too much of the energy to the antenna is wasted as heat flowing into the dielectric and surroundings.

The discussion above makes it clear that (1) a patch antenna design can be used effectively in UHF smart shelf and similar applications, and (2) use of the patch type of antenna would be even more advantageous, and satisfy the previously discussed practical requirements of smart shelving more completely if there were some way of overcoming the constraints on the thickness of the antenna imposed by the requirements of high bandwidth and radiation efficiency. Also, it would be advantageous to find a new design for the patch antenna which simplifies the attachment of the feed cable or wire. In addition, it would be advantageous to find a new antenna design which spread the UHF radiation more evenly and over a greater area of the surface of the shelf containing the antenna (*i.e.,* in the region above the radiating element plane) than is possible for the traditional patch antenna design. As noted above, the relatively short wavelength (approximately 12 inches) of UHF emissions can present challenges to the designers of UHF smart shelving who want to be able to effectively and consistently read tags at any location on the shelf. A better UHF antenna design would minimize this problem, and allow better "field spreading" or "field shaping" in the regions immediately above and around the edges of the antenna. Such an improved patch antenna design is described in U.S. Patent Application Ser. No. 12/247,994, filed Oct. 8, 2008 entitled "RFID Patch Antenna with Coplanar Reference Ground and Floating grounds.". The embodiments described in that patent application involve a patch antenna design with a radiative element and reference ground element in the same plane or in closely spaced parallel planes, such that there is no substantial overlap between the radiative element of the first plane and the reference ground element of the second plane. That is, the radiative element and ground element are side-by-side rather than stacked with the radiative element above the ground element. That invention, in its various embodiments as described in the previous patent application, overcomes the above-mentioned limitations of the traditional patch antenna design, and results in a new patch antenna which is much thinner without sacrificing bandwidth and radiation efficiency. Also, that invention allows for a much simpler antenna feed cable attachment than the traditional patch antenna approach. Also, that invention allows for a more evenly distributed UHF field around the antenna which makes it easier to avoid dead zones, and allows the smart shelf designer to spread or shape the field evenly around the antenna. That invention, in its various embodiments, particularly those implementing a floating ground element or elements in addition to the reference ground element, and with the floating ground element or elements located beneath the plane holding the main radiative element and reference ground, results in superior antenna gain, bandwidth, and tuning robustness in RFID smart shelf applications, as well as similar applications in which it is desired to interrogate a number of RFID tags located in close proximity, with low-power RFID signals localized in a small physical space which would normally result in tuning difficulties for traditional patch antennas.

The current invention extends the ideas of U.S. Patent Application Ser. No. 12/247,994, filed Oct. 8, 2008 for "RFID Patch Antenna with Coplanar Reference Ground and Floating grounds," by adding additional, secondary radiative elements which are directly, electrically connected to the primary radiative element. These one or more secondary radiative elements are located in the same plane which contains the primary radiative element, and are attached to the primary radiative element at one or more edges by conductive traces. These secondary radiative elements may be of a size and shape similar to the primary radiative element, or they may be somewhat more narrow and of a higher aspect ratio. The addition of the one or more secondary radiative elements to the coplanar antenna designs described in the previous patent application offers several advantages. First, the bandwidth is increased. Second, a thinner antenna can be designed to meet a given bandwidth requirement. Finally, the antenna radiation gain is increased (*i.e.,* less power is needed to scan the space).

### SUMMARY

The invention provides an antenna for use in a radio frequency identification system with radio frequency (RF) signals, according to appended claim 1. Further optional features are provided in the appended dependent claims.

In accordance with an embodiment, reader antennas are provided, for disposal within storage fixtures (for example, shelves, cabinets, drawers, or racks) for transmitting and receiving RF signals between, for example, an RFID reader and an RFID tag or transponder.

In a further aspect, a DC connection for ESD protection is provided.

The reader antennas, as described, may be placed in a variety of configurations which include but are not limited to configurations in which, for each antenna, the primary radiative antenna element and the reference ground element for the antenna are located within the same physical or geometric plane, or in two parallel closely spaced planes separated by a dielectric laminate, with little or no overlap between the radiative antenna element and the reference ground element, and in which one or more secondary radiative antenna elements are placed adjacent to and in the same plane which contains the primary radiative element, or in one or more closely spaced parallel planes, with little or no overlap between the primary and secondary radiative elements, and such that each secondary radiative element is electrically connected to an edge of the primary radiative element by a conductive trace.

In a preferred embodiment, the RFID-enabled storage fixtures are equipped with multiple patch antennas, each patch antenna having its own reference ground element coplanar with or substantially coplanar with the respective patch antenna's primary and secondary radiative elements.

Furthermore, in another embodiment, these RFID-enabled fixtures are implemented using an intelligent network in which the antennas are selected, activated, and otherwise managed by a supervisory control system.

### BRIEF DESCRIPTION OF THE DRAWINGS

These and other aspects and features of the present invention will become apparent to those of ordinary skill in the art upon review of the following description of specific embodiments of the invention in conjunction with the accompanying figures, wherein:
FIG. 1 shows a patch antenna design typical of the prior art.
FIG. 2 shows a patch antenna with coplanar reference ground, as described in the previous patent application.
FIG. 3 shows an example of a patch antenna in which a secondary radiative antenna element has been placed adjacent to and connected to the primary radiative antenna element.
FIG. 4 shows an example of a patch antenna with coplanar reference ground and coplanar secondary radiative antenna element with high-aspect-ratio rectangular shape.
FIG. 5 shows an example of a patch antenna with coplanar reference ground and two coplanar secondary radiative antenna elements with high-aspect-ratio rectangular shape.
FIG. 6 shows a detail drawing of the coaxial cable connection to the antenna patch and reference ground planes.
FIG. 7 shows examples of alternative radiative antenna element shapes.
FIG. 8 shows the traditional patch antenna design used in computer simulation, with antenna dimension labels.
FIG. 9 shows the return loss plot for the traditional patch antenna design shown with dimensions in Figure 8.
FIG. 10 shows computer simulation results on bandwidth as a function of antenna substrate (dielectric layer) thickness for a traditional patch antenna.
FIG. 11 shows the dual patch antenna with coplanar reference ground used in computer simulation, with antenna dimension labels.
FIG. 12 shows the return loss plot for the dual patch antenna shown in Figure 11.
FIG. 13 shows an example of a patch antenna having radiative antenna elements oriented in different directions.
FIG. 14 shows an example of a patch antenna array having antenna elements oriented in different directions.

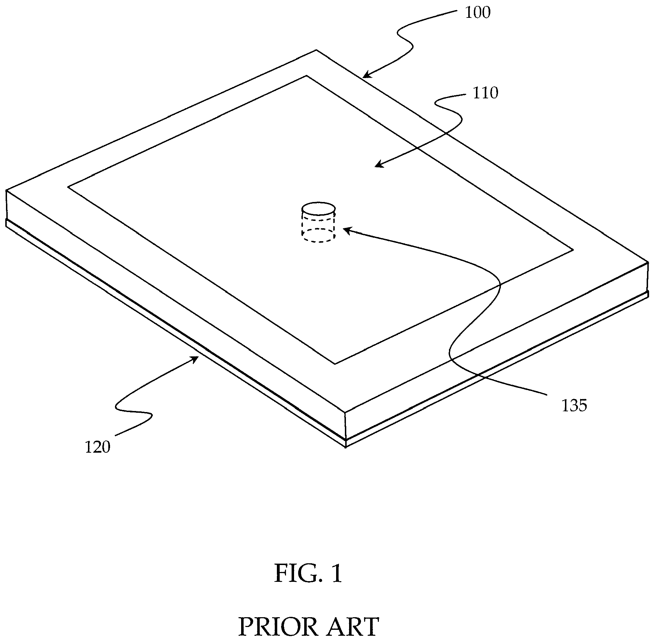

FIG. 1 5 shows an example of a patch antenna array having an alternative arrangement of radiative antenna elements.

### DETAILED DESCRIPTION OF THE INVENTION

Embodiments and applications of the current invention will now be described. Other embodiments may be realized and changes may be made to the disclosed embodiments without departing from the scope of the invention. Although the embodiments disclosed herein have been particularly described as applied to the field of RFID systems, it should be readily apparent that the invention may be embodied in any technology having the same or similar problems.

In the following description, a reference is made to the accompanying drawings which form a part hereof and which illustrate several embodiments. It is understood that other embodiments may be utilized and structural and operational changes may be made without departing from the scope of the descriptions provided.

FIG. 1 is a drawing showing a patch antenna from the prior art. In this design the supporting dielectric material 100 separates the radiative antenna element 110 (top side of the dielectric) and the reference ground element 120 (bottom side of the dielectric). Feed point 135 requires a hole in the dielectric so that the ground element of the feed cable (not shown) can be attached to the reference ground 120. Each of the radiative antenna elements described herein are also referred to as patch antenna elements, as they are formed using a patch antenna construction and are used for both transmission and reception of HF and UHF signals, particularly for mid-field transmissions on the order of a wavelength, as discussed herein. These antenna elements are formed of a thin sheet of copper or some other conductive metal or ink printed, etched, or otherwise fabricated on a thin insulating sheet, as described further herein.

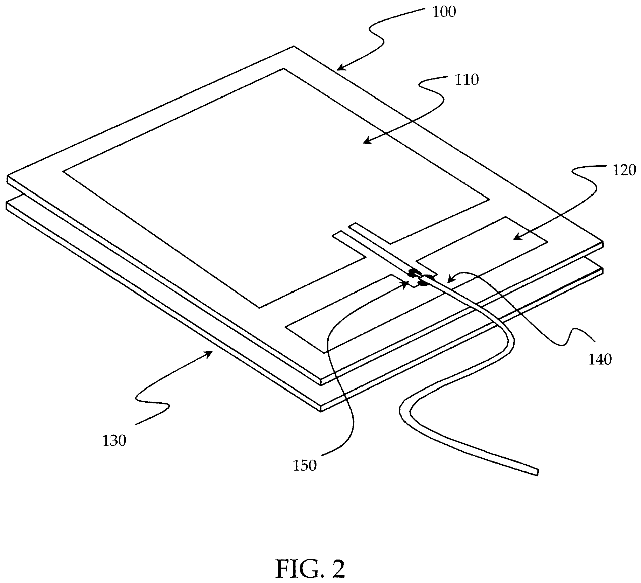

FIG. 2 is a drawing illustrating an exemplary patch antenna assembly in accordance with example useful for understanding the invention. In this example a first supporting dielectric material 100 like that commonly used in printed circuit boards is used to support the radiative antenna element 110 and reference ground element 120. In another example the radiative antenna element may be copper or some other conductive metal or ink printed, etched, or otherwise fabricated on a thin insulating substrate, such as a thin plastic sheet (*e.g.,* copper for the patch antenna and reference ground and trace elements formed on Mylar), which plastic sheet (not shown in FIG. 2) is itself, if desired, placed on top of a suitable dielectric material 100 such as a foamed plastic of a specific design thickness (*e.g.,* 2 or 3 mm), or also used for mounting on a shelf that has a suitable dielectric material. In FIG. 2, floating ground 130 is a solid metal sheet, metal foil laminated to the top or bottom surface of a dielectric material, or laminated to some other convenient carrier surface (not shown in the FIG. 2) above or below the dielectric layer 100. Alternatively, the floating ground 130 can be a printed or etched conductor on the underside of the same circuit board or other dielectric material layer 100 which is supporting the radiative antenna element 110 and the reference ground element 120. In an example of the current invention there is an air-filled space or gap between the dielectric material supporting the floating ground 130 and the dielectric material supporting the radiative antenna element 110 and reference ground element 120. The size of the air space or gap is maintained in an example by a non-conductive support which holds the edges of the two printed circuit boards at a fixed distance of separation. In another example the elements 110, 120, and 130 are all fabricated on two sides of a single dielectric material, such as a foamed plastic. The antenna patch 110, reference ground 120 and floating ground 130 are typically comprised of solid copper metal plating, but it should be immediately clear to those skilled in the art that other types of electrically conductive materials may be used for these elements of the antenna assembly. Signals are fed to the antenna at point 150 where, in an example, a coaxial cable 140 has been attached with the cable's core conductor soldered to the radiative antenna element and the cable shielding mesh soldered to the reference ground element, as shown. In an example the total separation between the antenna patch 110 and the floating ground 130 is between 2 and 3 mm, but larger or smaller separations can also be used. Easy feeding is an obvious advantage of this configuration since the radiative antenna element 110 and the reference ground element 120 are in the same plane and situated close to each other.

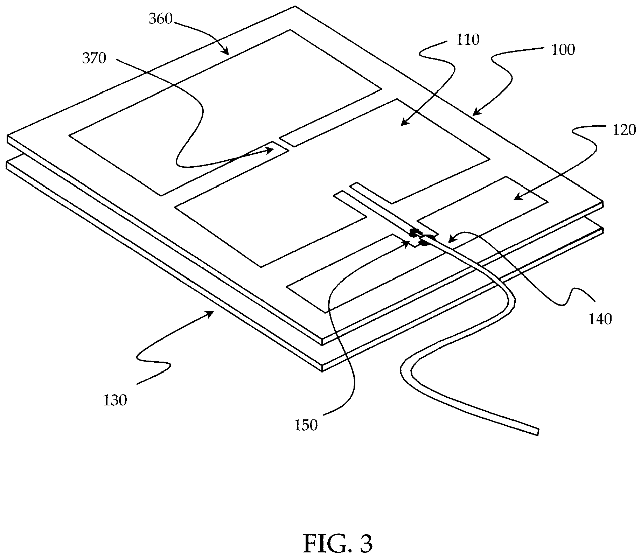

FIG. 3 is a drawing illustrating an exemplary patch antenna assembly in accordance with an example. Here, a secondary radiative antenna element 360 has been added and physically connected to the primary radiative antenna element 110 *via* the conductive trace 370. In an example the secondary radiative antenna element is placed adjacent to and coplanar with the primary radiative element. In other examples the secondary element may be placed in one or more closely spaced parallel planes, with little or no overlap between the primary and secondary radiative elements. It should be recognized that in alternative examples the trace 370 may not necessarily be connected to the edges of radiative elements. The connection can be inside of the radiative elements, and its location may vary.

In the current example the secondary antenna element can be put on any one of the three open sides of the primary antenna element. FIG. 3 shows one of these locations, but should not be considered as in any way limiting of the current example.

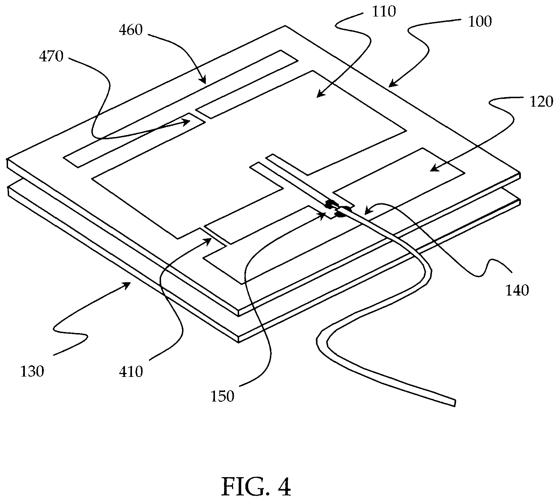

The shape and proportions of the secondary radiative element may be similar to the primary radiative element (as shown in FIG. 3), or it may have different shape or proportion, as shown in FIG. 4 in which secondary radiative antenna element 460 has been connected to primary radiative antenna element 110 *via* trace 470. The advantage of the secondary radiative antenna element with this high aspect ratio is a more compact antenna design, although the radiation bandwidth is somewhat reduced, relative to the design of FIG. 3.

According to various examples, the patch antenna may be quite small and formed on a thin substrate. As a result, they are susceptible to buildup of static electrical charge which can damage circuit components. For instance, touching a patch antenna can cause an electrostatic discharge (ESD) pulse capable of destroying RF components coupled to the patch antenna. FIG. 4 illustrates a DC short connection 410 which provides ESD protection by safely dissipating accumulated electrical charge. In particular, DC short connection 410 reduces buildup of static electrical charge between primary radiative antenna element 110 and the reference ground element 120, and also improves antenna performance by deeply suppressing the third harmonic signal, which affects the in-band and out-of-band communication.

DC short connection 410 may be provided in the same plane as primary radiative antenna element 110 and reference ground element 120. In contrast, conventional patch antennas, such as microstrip antennas, may connect ground through the PCB substrate to the center of the patch, which is a virtual ground due to the symmetry of the patch. According to various embodiments, it is advantageous to provide DC short connection 410 coplanar with the patch and ground since it may not be possible or desirable to route a ground connection through the substrate.

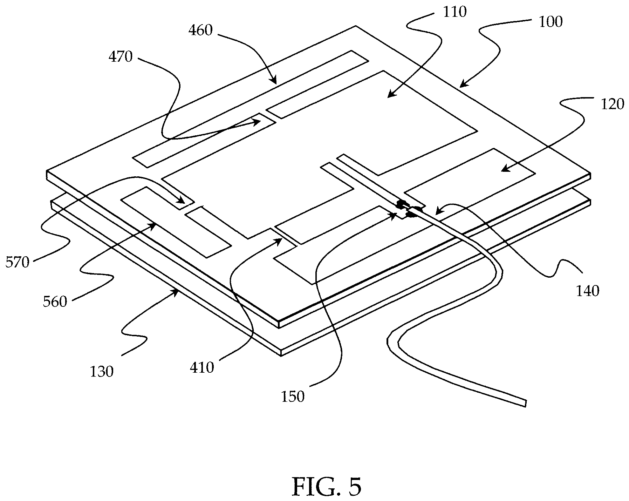

In an embodiment, additional secondary radiative antenna elements can be added to further increase the radiation bandwidth. FIG. 5 shows two secondary radiative antenna elements 460 and 560 connected to the primary radiative antenna element 110 *via* traces 470 and 570. It should be recognized that other embodiments exist in which additional secondary antenna elements are added. FIG. 5 is provided by way of example only and is not intended to limit the scope and application of the current invention.

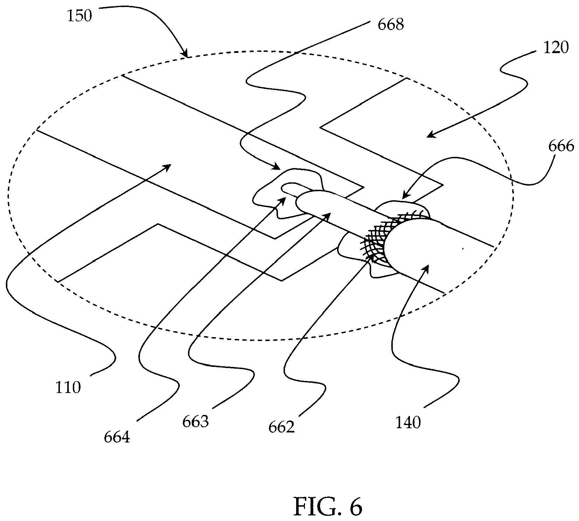

FIG. 6 shows in more detail the connection point 150 of a coaxial cable 140 to the antenna patch 110 and reference ground 120. The coaxial cable 140 includes a core conductor 664 and shielding 662 separated by insulator 663. In cable connection 150 the core conductor 664 is connected to primary radiative antenna element 110 with solder 668. Also, shielding 662 is connected to reference ground element 120 with solder 666. It should be clear to one skilled in the art that the coaxial cable 140 shown in the figures of the current invention may be replaced by any other appropriate transmission lines, including microstrip lines, coplanar lines, or wire set capable of carrying the signal and reference voltages needed in the application addressed by the current invention.

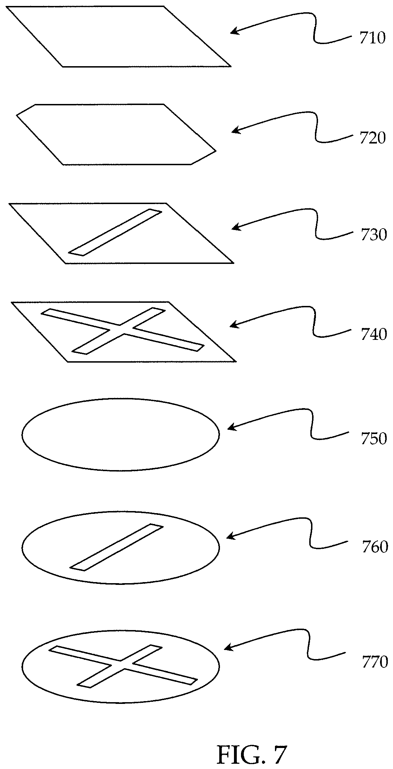

The primary and secondary radiative antenna elements of the current invention may be implemented in any pattern or geometrical shape (*e.g.,* square, rectangular, circle, free flow, etc.). Several of these shape alternatives are shown in FIG. 7, including a rectangular shape 710, rectangular shape with trimmed corners along one diagonal 720, rectangular shape with a slot 730, rectangular shape with two orthogonal slots 740, circular shape 750, circular shape with a slot 760, and circular shape with two orthogonal slots 770. These alternatives are shown by way of example only and are not intended to limit the scope and application of the current invention. Trimmed or angled corners, such as those used with antenna shape 720, and slots such as those used in antenna shapes 730, 740, 760, and 770 of FIG. 7 lead to a more circularly polarized field around the antenna and improve tag readability.

The primary and secondary radiative antenna elements of the current invention may be made up of a metal plate, metal foil, printed or sprayed electrically conductive ink or paint, conductive polymer material, metal wire mesh, or other functionally equivalent material (*e.g*., film, plate, metal flake, etc.), or any other homogeneous or composite material of adequate conductivity. The material of antenna substrate 100 is a dielectric material (*e.g*., the material typically used for printed circuit boards) or any other material having negligible electrical conductivity (including a combination of two or more different types of such negligibly conductive material, as may be used in a laminated or layered structure).

The transmission line, shown as cable 140, may have at either end, or located along its length, tuning components (not shown) such as capacitors and inductors. The sizes (*e.g.,* capacitance or inductance) of these tuning components are chosen based on the desired matching and bandwidth characteristics of the antenna, according to practices well known to those skilled in the art.

The shapes of the primary and secondary radiative antenna elements and reference ground element, the relative locations among the primary and secondary radiative antenna elements and reference ground element, the locations and widths of conductive traces, the feed location for the primary radiative antenna element and the reference ground element, the size and placement of slots, slits, or other voids in the primary and secondary radiative antenna elements and/or reference ground element, as well as the presence or absence of the floating ground element, its size and shape, the dielectric material and its thickness between the radiative antenna elements and the floating ground element, and the location of or presence of an electrical connection or "short" between the primary radiative antenna element and floating ground, may each individually or together be adjusted to optimize the antenna radiation bandwidth, radiation gain, radiation pattern, radiation efficiency, and antenna polarization. Also, the above characteristics of the antenna and its various components, particularly the characteristics of antenna element shapes, slots, slits, and cut corners, can be adjusted to reach the desired antenna size. For example, the details of the slits or slots, and nature of the cut corners, also have a significant effect on the frequency response of the antenna, and can be used to increase the bandwidth of the antenna. It is observed that the addition of one secondary square radiative element with diagonal corner cuts contributes two inherent resonant frequencies to the antenna characteristics, while the addition of one secondary radiative element with high-aspect-ratio can contribute one resonant frequency. As a result, the introduction of secondary radiative elements extends the antenna radiation bandwidth. It is well known that the bandwidth of a patch antenna decreases when the thickness of dielectric substrate decreases. Addition of one or more secondary radiative antenna elements according to the current invention allows one to use a thinner substrate without sacrificing antenna bandwidth. The other advantage of the secondary radiative elements is gain enhancement because of the combination effect (constructive and destructive interference) of radiated electromagnetic fields from antenna elements.

For antenna designs typical of the prior art, the placement of metal objects below the antenna changes the resonance frequency of the antenna and can cause serious detuning. This problem has been greatly relieved by the current invention. The antenna structure of an embodiment of the current invention performs well even when a metal plate or other conductive object is placed closely below the antenna structure (such as a metal retail or storage shelf) due to the constrained electromagnetic field. Because the floating ground introduced for the metal shelf works as a reflector, the radiation can only happen in one direction. Therefore, the antenna has higher gain, but usually reduced bandwidth.

Detailed computer simulations were undertaken to demonstrate some of the advantages of the current invention relative to the prior art.

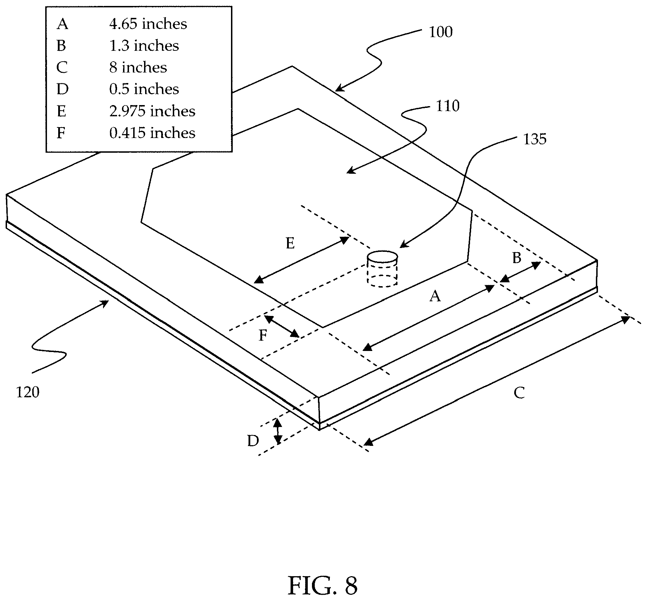

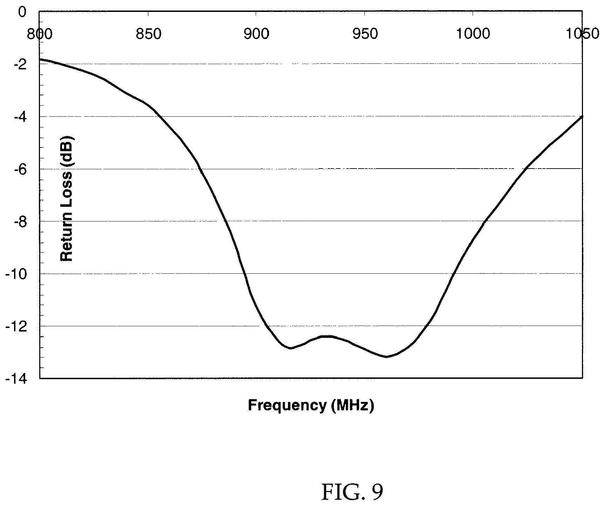

FIG. 8 shows a particular example of the prior art patch antenna having a square radiative antenna element with cut corners (for production of circularly polarized fields and bandwidth enhancement), and a square reference ground element in a plane below the plane of the radiative antenna element. The distance A in FIG. 8 is 4.65 inches, and distance B is 1.3 inches. Note that the corner cuts were made at a 45 degree angle. The distance C (edge length of the reference ground element) is 8 inches. The distance D between the two planes in FIG. 8 is 0.5 inches. The feed point for the antenna in FIG. 8 is located 2.975 inches from the side of the radiative element (distance E) and 0.415 inches from the front edge of the radiative element (distance F). In the simulation, air was used as the dielectric substrate between the two planes. Copper is used for the radiative element and the reference ground. The material surrounding the antenna was assumed to be air. FIG. 9 shows the return loss in dB, as a function of frequency, for the described antenna.

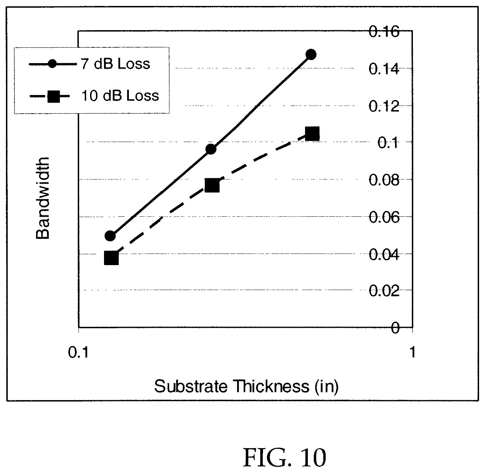

FIG. 10 shows the bandwidth (at 915 MHz central frequency) decreases as the dielectric substrate thickness decreases, where the air substrate is used. For example, the bandwidth is approximately 14.8% at -7 dB and 10.5% at -10dB for the 0.5 in air substrate. Note from FIG. 10 that when the dielectric substrate thickness is reduced to 1/8 inch, the bandwidth is only about 4% at -10 dB return loss, and about 5% at -7 dB return loss.

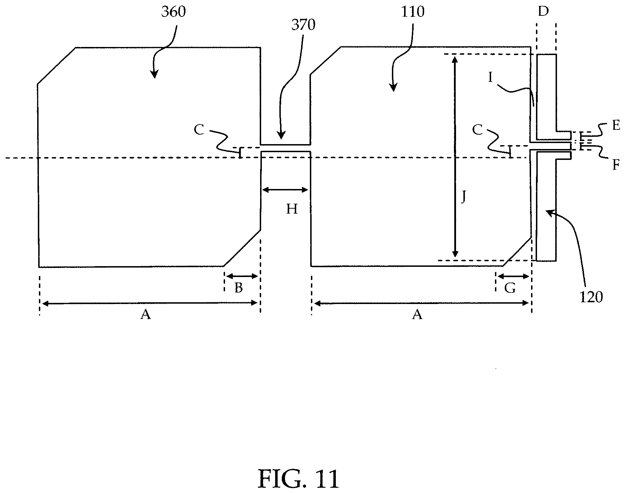

FIG. 11 shows a specific example of a patch antenna with coplanar reference ground 120 (split into upper and lower halves), a coplanar primary radiative antenna element 110, and a single coplanar secondary radiative antenna element 360 of the same size and shape as the primary radiative antenna element. This antenna was simulated by computer using the following element dimensions (reference FIG. 11): A (length of primary and secondary radiative elements) = 5.96 in; B = 0.85 in; G = 0.75 in; C (offset of trace 370 from the center line) = 0.1 in; D = 0.44 in; E (width of trace feeding reference ground 120) = 0.24 in; F (width of trace feeding primary radiative element 110) = 0.24 in; H = 1.14 in; I = 0.1 in, and J = 5.60 in. Note that the primary and secondary radiative antenna elements are square (*i.e.,* their lengths are equal to their widths). Also note that the separation distance between the traces feeding the two halves of the reference ground and the primary radiative element is 0.01 in. The simulation was carried out assuming a floating ground plane (not shown in FIG. 11) 0.125 inches beneath the plane containing the radiative and reference ground elements. That 0.125 in gap was assumed to have the dielectric properties of volara foam.

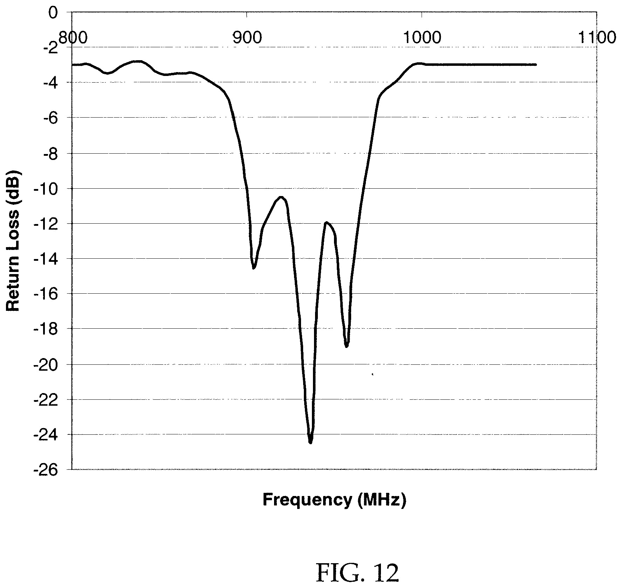

FIG. 12 shows the results of the computer simulation of the antenna of FIG. 11. The introduction of a secondary radiative element has resulted in an additional resonance peak. That is, FIG. 12 shows three peaks, whereas FIG. 11 of the previous patent application (U.S. Patent Application Ser. No. 60/978,389), which corresponds to a coplanar antenna without the secondary radiative element, shows only two peaks. The bandwidth of the dual radiative element antenna of FIG. 11 can be calculated using the data shown in FIG. 12. At -7 dB return loss, the band stretches from 890 to 970 MHz, which corresponds to a bandwidth of 8.5% (referenced to the center frequency of 930 MHz). At -10 dB return loss the bandwidth is 7%. Thus, for the dual radiative element antenna of the current invention (*e.g.,* that shown in FIG. 11), the bandwidth is approximately 75% greater than that of the prior art antenna shown in FIG. 8, when compared at equal dielectric substrate thickness.

In another embodiment of the current invention, the metal of the retail shelf may itself be used as a floating ground or, alternatively, the shelf may be constructed such that a common sheet of metal is used as both a floating ground plane and also a physical support for the antenna assembly or antenna assembly array, as well as objects which may be placed upon the fixture, such as retail items holding RFID tags.

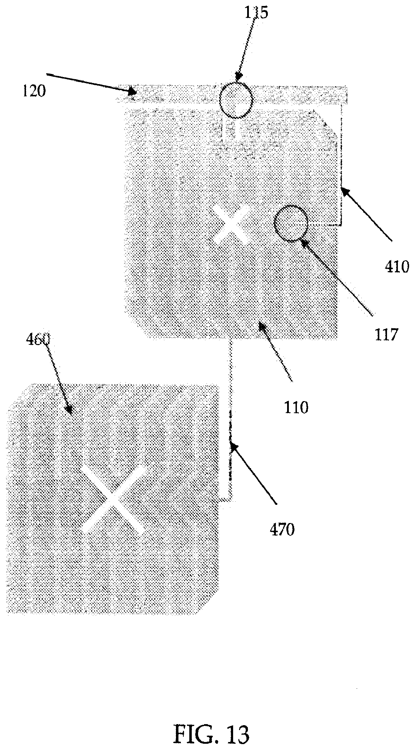

FIG. 13 shows an example of a patch antenna having radiative antenna elements oriented in different directions to improve polarization. In particular, the relative phase shift is changed between radiative antenna element 110 and secondary radiative antenna element 460 due to the presence of DC short connection 410. Rotating secondary radiative antenna element 460, e.g., 90 degrees, with respect to radiative antenna element 110 can provide an antenna having a good circularly polarized ratio through the whole frequency band.

FIG. 13 shows only one configuration with large circular polarization bandwidth, there are of course other available configurations by changing the circularly polarized orientation (left-hand or right-hand) of the single patch, by changing the relative phase shift between two patches (the orientation of the single patch, and the location and length of the connection 470).

FIG. 13 also shows DC short 410 connected to secondary radiative antenna element 460 via 1-0 117, in a manner similar to that described in Figure 4 with DC short connection 410, but further including a dented connection 117. Dented connection 117 is used in order to provide a slot at the edge of the patch antenna element 110 so that the DC short connection connects to the patch antenna element 110 at a location closer to a center of the patch antenna element 110, thereby enabling the virtual ground to be connected to ground without affecting the antenna performance due to the addition of trace 410, since the radiation is mainly along the edge of the patch. Furthermore, Fig. 13 shows antenna feed 115 which supplies an RF signal and ground and can be seen in more detail with respect to Fig. 11.

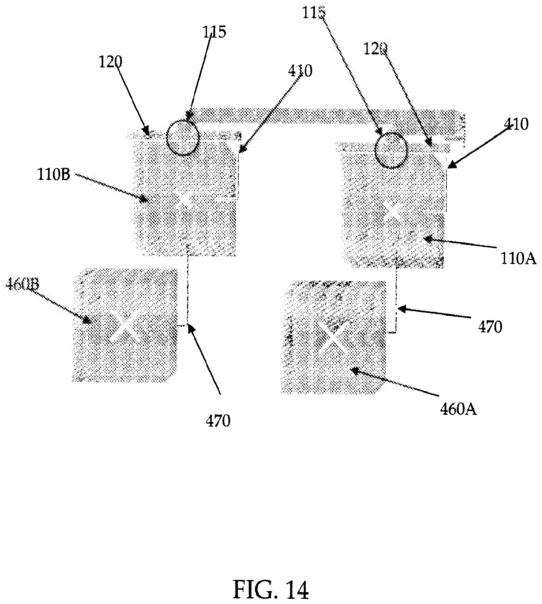

FIG. 14 shows an example of an array of patch antennas. In an example, each antenna in the array can be orientated in the same direction. For example, a first antenna (i.e., comprising elements 110A and 460A) and another antenna (i.e., comprising elements 110B and 460B) are orientated in the same direction. Furthermore, each antenna can comprise radiative antenna elements oriented in different directions (as shown in Fig. 13). Each antenna can also radiate in either left-hand circular polarization or right-hand circular polarization.

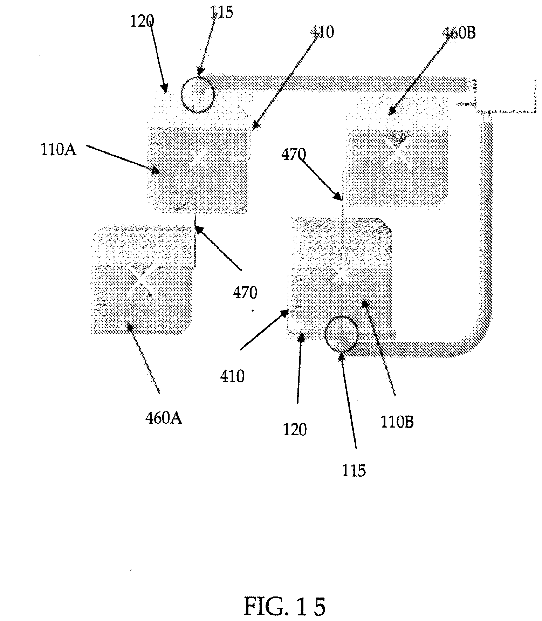

FIG. 15 shows an example of a patch antenna array having an alternative arrangement of radiative antenna elements. In an embodiment, a first antenna (i.e., comprising elements 110A and 460A) can be rotated 180 degrees with respect to another antenna (i.e., comprising elements 110B and 460B). The antenna array can, of course, include more antennas than the two illustrated. The physical orientation and circularly polarized orientation of antennas are determined by the application scenarios, which may vary from case to case.

According to various embodiments, each antenna comprises its own path to ground 120 via DC short connection 410.

The current invention explicitly includes and encompasses all embodiments which may be imagined by variation of one or more features of the embodiments described in this specification, including radiative antenna element size, shape, thickness, void, slit, or slot shape, reference ground element size, shape, placement within the two dimensions of the plane occupied by the radiative antenna element, distance separating the radiative antenna element and reference ground element, position and manner of attachment of the signal feed line or cable to the radiative antenna element and reference ground element, shape, or thickness of the floating ground plane, separation distance between the floating ground and the radiative antenna element, the dielectric material or materials used to separate the radiative antenna element from the reference ground and floating ground, the conductive material or materials used to fabricate the radiative antenna element, reference ground, and floating ground, the number of antenna assemblies used in the array, or materials and structures used to house and protect the antenna assembly or antenna assembly array.

The current invention also encompasses all embodiments in which the antenna assembly array is replaced by a single antenna assembly (*i.e.,* with a single patch antenna).

It should also be noted that various arrays of antenna assemblies may be constructed in which the antenna assemblies occupy two different planes. For example, one may build an array of antenna assemblies in which some of the assemblies are located inside a first geometric plane, and the remainder of the assemblies is located inside a second geometric plane orthogonal to the first geometric plane. This embodiment is given by way of example only, and it should be noted that the two planes need not necessarily be orthogonal. Also, it is conceivable that more than two geometric planes may be used in the placement of the antenna assemblies. Such a multi-planar array of antenna assemblies may improve the robustness of the array in some applications in which, for instance, the orientation of the RFID tags to be interrogated by the antennas is not known, or is known to be random or varying. In addition, the application may demand specific electrical or magnetic field polarization which may be produced by placement of the antenna assemblies in several planes. All of the embodiments which may be imagined for the placement of multiple antenna assemblies in multiple planes are explicitly included in the current invention.

## Claims

1. An antenna for use in a radio frequency identification system with radio frequency (RF) signals comprising:
a reference ground (120);
an antenna feed (150);
a primary patch antenna element (110) for mid-field transmission and reception of the RF signals, wherein the primary patch antenna element is electrically coupled to the antenna feed;
one or more additional patch antenna elements (360,460, 560) for mid-field transmission and reception of the RF signals, wherein each of the one or more additional patch antenna elements is electrically connected to an edge of the primary patch antenna element for transmission and reception of the RF signals and wherein the one or more additional patch antenna elements provide for gain enhancement of the RF signals; further comprising a floating ground (130) **characterized in that** said floating ground is substantially parallel to, overlapping with and separated by an insulating substrate and an air-filled gap from each of the primary patch antenna element and the one or more additional patch antenna elements, wherein one or more additional patch antenna elements are rotated to have a different orientation with respect to the primary patch antenna element.

2. An antenna of claim 1 further including a thin insulating substrate (100) on which are formed the primary patch antenna element and the one or more additional patch antenna elements.

3. An antenna of claim 2 wherein the RF signals are one of HF and UHF broadband signals, and wherein the thin insulating substrate, in combination with the one or more additional patch antenna elements, provides sufficient bandwidth for the one of the HF and UHF broadband signals.

4. An antenna of claim 1, wherein the different orientation is 90 degrees between the primary patch antenna element and the one or more additional patch antenna elements.

5. An antenna of claim 1, further including a thin insulating substrate (100) on which are formed the reference ground, the primary patch antenna element, and the one or more additional patch antenna elements as coplanar electrical conductors.

6. An antenna of claim 1, wherein the primary patch antenna element and the one or more additional patch antenna elements are arranged in a plurality of closely spaced parallel planes and do not substantially overlap.

7. An antenna of claim 1, wherein the primary patch antenna element has a different aspect ratio than the one or more additional patch antenna elements.

8. An antenna of claim 1, wherein the one or more additional patch antenna elements comprise at least two patch antenna elements (460, 560) each electrically connected to the edge of primary patch antenna element.

9. The antenna of claim 1 further including a DC short connection (410) between an edge of the primary antenna element and the reference ground, wherein the DC short connection between the primary patch antenna element and the reference ground does not substantially interfere with the RF signals, wherein the DC short connection provides an electrostatic discharge path from the primary patch antenna element to the reference ground for electrostatic pulses.

10. An antenna according to claim 1 wherein the reference ground, the antenna feed, the primary patch antenna element and the one or more additional patch antenna elements together form an antenna assembly, and further including a plurality of antenna assemblies, thereby providing an antenna array.

11. An antenna according to claim 10 wherein the plurality of antenna assemblies are formed on a common thin insulating substrate.

12. An antenna of claim 10 wherein one of the antenna assemblies is rotated to have a different orientation with respect to other ones of the plurality of antenna assemblies.

## Patentansprüche

1. Antenne zur Verwendung in einem Radiofrequenz-Identifikationssystem mit Radiofrequenz (RF) -Signalen, umfassend:
eine Bezugsmasse (120);
eine Antennenzuleitung (150);
ein primäres Patch-Antennenelement (110) zum Übertragen und Empfangen der RF-Signale im mittleren Feld, wobei das primäre Patch-Antennenelement elektrisch mit der Antennenzuleitung verbunden ist;
ein oder mehrere zusätzliche Patch-Antennenelemente (360, 460, 560) zum Übertragen und Empfangen der RF-Signale im mittleren Feld, wobei jedes der ein oder mehreren zusätzlichen Patch-Antennenelemente elektrisch mit einer Kante des primären Patch-Antennenelements zum Übertragen und Empfangen der RF-Signale verbunden ist und wobei das eine oder die mehreren zusätzlichen Patch-Antennenelemente für eine Verstärkung der RF-Signale sorgen; ferner umfassend eine schwimmende Erdung (130), **dadurch gekennzeichnet, dass** die schwimmende Erdung im Wesentlichen parallel zu einem isolierenden Substrat und einem luftgefüllten Zwischenraum von jedem des primären Patch-Antennenelements und dem einen oder den mehreren zusätzlichen Patch-Antennenelementen ist, mit diesem überlappt und durch dieses getrennt ist, wobei ein oder mehrere zusätzliche Patch-Antennenelemente gedreht werden, um eine andere Ausrichtung in Bezug auf das primäre Patch-Antennenelement zu haben.

2. Antenne nach Anspruch 1, ferner umfassend ein dünnes isolierendes Substrat (100), auf dem das primäre Patch-Antennenelement und das eine oder die mehreren zusätzlichen Patch-Antennenelemente ausgebildet sind.

3. Antenne nach Anspruch 2, wobei die RF-Signale HF- und UHF-Breitbandsignale sind, und wobei das dünne isolierende Substrat in Kombination mit dem einen oder den mehreren zusätzlichen Patch-Antennenelementen eine ausreichende Bandbreite für das eine der HF- und UHF-Breitbandsignale bereitstellt.

4. Antenne nach Anspruch 1, wobei die unterschiedliche Ausrichtung zwischen dem primären Patch-Antennenelement und dem einen oder den mehreren zusätzlichen Patch-Antennenelementen 90 Grad beträgt.

5. Antenne nach Anspruch 1, ferner mit einem dünnen isolierenden Substrat (100), auf dem die Bezugsmasse, das primäre Patch-Antennenelement und das eine oder die mehreren zusätzlichen Patch-Antennenelemente als koplanare elektrische Leiter ausgebildet sind.

6. Antenne nach Anspruch 1, wobei das primäre Patch-Antennenelement und das eine oder die mehreren zusätzlichen Patch-Antennenelemente in einer Vielzahl von nahe beabstandeten parallelen Ebenen angeordnet sind und sich nicht wesentlich überlappen.

7. Antenne nach Anspruch 1, wobei das primäre Patch-Antennenelement ein anderes Größenverhältnis als das eine oder die mehreren zusätzlichen Patch-Antennenelemente aufweist.

8. Antenne nach Anspruch 1, wobei das eine oder die mehreren zusätzlichen Patch-Antennenelemente mindestens zwei Patch-Antennenelemente (460, 560) umfassen, die jeweils elektrisch mit der Kante des primären Patch-Antennenelements verbunden sind.

9. Antenne nach Anspruch 1 beinhaltet ferner eine DC-Kurzverbindung (410) zwischen einer Kante des primären Antennenelements und der Bezugsmasse, wobei die DC-Kurzverbindung zwischen dem primären Patch-Antennenelement und die Bezugsmasse nicht wesentlich mit den RF-Signalen interferiert, wobei die DC-Kurzverbindung einen elektrostatischen Entladungsweg von dem primären Patch-Antennenelement zu der Bezugsmasse für elektrostatische Impulse bereitstellt.

10. Antenne nach Anspruch 1, wobei die Bezugsmasse, die Antennenzuleitung, das primäre Patch-Antennenelement und das eine oder mehrere zusätzliche Patch -Antennenelemente zusammen eine Antennen -Anordnung ausbilden, und ferner eine Vielzahl von Antennen-Anordnungen beinhalten, wodurch ein Antennen -Array bereitgestellt wird.

11. Antenne nach Anspruch 10, wobei die Vielzahl von Antennen - Anordnungen auf einem gemeinsamen dünnen isolierenden Substrat ausgebildet sind.

12. Antenne nach Anspruch 10, wobei eine der Antennenanordnungen so gedreht wird, dass sie eine andere Ausrichtung in Bezug auf andere der Vielzahl von Antennenanordnungen aufweist.

## Revendications

1. Antenne destinée à être utilisée dans un système d'identification par radiofréquence avec des signaux de radiofréquence (RF) comprenant :
une masse de référence (120) ;
une alimentation d'antenne (150) ;
un élément d'antenne à plaque primaire (110) pour une transmission et une réception de champ intermédiaire des signaux RF, dans laquelle l'élément d'antenne à plaque primaire est couplé électriquement à l'alimentation d'antenne ;
un ou plusieurs éléments d'antenne à plaque additionnels (360, 460, 560) pour une transmission et une réception de champ intermédiaire des signaux RF, dans laquelle chacun parmi l'un ou plusieurs éléments d'antenne à plaque additionnels est connecté électriquement à un bord de l'élément d'antenne à plaque primaire pour la transmission et la réception des signaux RF et dans laquelle l'un ou plusieurs éléments d'antenne à plaque additionnels assurent une amplification de gain des signaux RF ; comprenant en outre une masse flottante (130) **caractérisée en ce que** ladite masse flottante est substantiellement parallèle à, chevauchant avec et séparée par un substrat isolant et un vide rempli d'air provenant de chacun parmi l'élément d'antenne à plaque primaire et l'un ou plusieurs éléments d'antenne à plaque additionnels, dans laquelle un ou plusieurs éléments d'antenne à plaque additionnels sont mis en rotation pour avoir une orientation différente par rapport à l'élément d'antenne à plaque primaire.

2. Antenne selon la revendication 1, incluant en outre un substrat fin isolant (100) sur lequel se forment l'élément d'antenne à plaque primaire et l'un ou plusieurs éléments d'antenne à plaque additionnels.

3. Antenne selon la revendication 2, dans laquelle les signaux RF sont un des signaux à large bande HF et UHF, et dans laquelle le substrat fin isolant, en combinaison avec l'un ou plusieurs éléments d'antenne à plaque additionnels, fournit une bande passante suffisante pour le signal ou pour les signaux à large bande HF et UHF.

4. Antenne selon la revendication 1, dans laquelle l'orientation différente est de 90 degrés entre l'élément d'antenne à plaque primaire et l'un ou plusieurs éléments d'antenne à plaque additionnels.

5. Antenne selon la revendication 1, incluant en outre un substrat fin isolant (100) sur lequel se forment la masse de référence, l'élément d'antenne à plaque primaire, et l'un ou plusieurs éléments d'antenne à plaque additionnels comme conducteurs électriques coplanaires.

6. Antenne selon la revendication 1, dans laquelle l'élément d'antenne à plaque primaire et l'un ou plusieurs éléments d'antenne à plaque additionnels sont disposés dans une pluralité de plans parallèles rapprochés et qui ne se chevauchent substantiellement pas.

7. Antenne selon la revendication 1, dans laquelle l'élément d'antenne à plaque primaire a un rapport différent de forme par rapport à l'un ou plusieurs éléments d'antenne à plaque additionnels.

8. Antenne selon la revendication 1, dans laquelle l'un ou plusieurs éléments d'antenne à plaque additionnels comprennent au moins deux éléments d'antenne à plaque (460, 560) chacun électriquement connecté au bord de l'élément d'antenne à plaque primaire.

9. Antenne selon la revendication 1, incluant en outre une connexion courte CC (410) entre un bord de l'élément d'antenne primaire et la masse de référence, dans laquelle la connexion courte CC entre l'élément d'antenne à plaque primaire et la masse de référence n'interfère substantiellement pas avec les signaux RF, dans laquelle la connexion courte CC fournit un chemin de décharge électrostatique de l'élément d'antenne à plaque primaire à la masse de référence pour des impulsions électrostatiques.

10. Antenne selon la revendication 1, dans laquelle la masse de référence, l'alimentation d'antenne, l'élément d'antenne à plaque primaire et l'un ou plusieurs éléments d'antenne à plaque additionnels forment ensemble un système d'antennes, et incluant en outre une pluralité de systèmes d'antennes, fournissant ainsi un réseau d'antennes.

11. Antenne selon la revendication 10, dans laquelle la pluralité de systèmes d'antennes sont formés sur un substrat courant fin isolant.

12. Antenne selon la revendication 10, dans laquelle un parmi les systèmes d'antennes est tourné pour avoir une orientation différente par rapport aux autres systèmes d'antennes parmi la pluralité de systèmes d'antennes.
